# FASCICULE DE BREVET EUROPEEN

(11) **EP 2 824 366 B1**
(45) Date de publication et mention de la délivrance du brevet: **31.10.2018**
(21) Numéro de dépôt: 14176623.8
(22) Date de dépôt: 10.07.2014
(51) Int. Cl.: F16H 25/22, H02K 7/06

(54) **Moteur électrique**
Elektromotor
Electric motor

(30) Priorité: 12.07.2013 FR 1356911
(43) Date de publication de la demande: 14.01.2015
(73) Titulaire: Moteurs Leroy-Somer, 16915 Angouleme (FR)
(72) Inventeur: Mounier, Christian, 69360 SAINT SYMPHORIEN D'OZON (FR); Rozek, Georges, 69360 CORBAS (FR); Chamand, Jérémy, 69360 SAINT SYMPHORIEN D'OZON (FR); Gherairi, Haikel, 38790 CHARANTONNAY (FR)
(74) Mandataire: Nony

(56) Documents cités:
- EP-A1- 1 437 819
- US-A- 2 688 520

## Description

La présente invention concerne les moteurs électriques et plus particulièrement mais non exclusivement ceux destinés à la réalisation d'actionneurs, notamment pour des bras robotisés.

Ces moteurs sont soumis, lors de leur fonctionnement, à des charges qui s'exercent sur l'arbre de façon alternée et la rotation de l'arbre doit s'effectuer sans jeu axial, avec précision.

La demanderesse a proposé, par le passé, un moteur électrique dont l'arbre est réalisé en deux parties assemblées l'une avec l'autre par vissage, à savoir une partie avant sur laquelle est réalisé un filet hélicoïdal externe qui coopère avec une roue dentée pour réaliser l'actionneur, et une partie arrière interne au carter du moteur. La partie avant est guidée en rotation par deux roulements à contacts obliques, bloqués axialement entre un épaulement de la partie avant de l'arbre et la partie arrière de l'arbre. Cette dernière est guidée en rotation par un roulement arrière. Un frein agit sur la partie arrière de l'arbre. Un joint à lèvre est disposé à l'intérieur du moteur, étant porté par un flasque avant qui maintient également les roulements à contacts obliques. Ce joint à lèvre s'applique sur la partie arrière de l'arbre. Un joint racleur est présent à l'avant du moteur, et définit avec le joint à lèvre un espace contenant un lubrifiant des roulements avant.

La demande de brevet EP 1 437 819 décrit un moteur électrique comportant un arbre monolithique et des aimants permanents tournant avec l'arbre et interagissant mécaniquement avec un stator.

Il existe un besoin pour perfectionner encore les moteurs destinés notamment à la réalisation d'actionneurs, en particulier pour améliorer leur compacité, leur précision et leur fiabilité.

L'invention a ainsi pour objet un moteur électrique, comportant :
- un rotor comportant un arbre présentant un épaulement,
- au moins un roulement avant de guidage de l'arbre,
- au moins un roulement arrière de guidage de l'arbre,
- des aimants permanents tournant avec l'arbre et interagissant mécaniquement avec un stator,
caractérisé par le fait que l'arbre est monolithique et le ou les roulements avant sont bloqués axialement contre l'épaulement par un écrou vissé sur l'arbre, l'arbre présentant une portion filetée en prise avec l'écrou, cette portion filetée s'étendant en arrière du ou des roulements avant, du côté arrière du stator.

De préférence, les aimants sont portés par l'écrou.

Par « monolithique », il faut comprendre que l'arbre est usiné d'un seul bloc.

De préférence, l'écrou vient en prise sur une partie interne filetée de l'arbre, qui est située du côté arrière du stator, ce qui permet en vissant l'écrou d'exercer une contrainte de traction sur l'arbre sur une portion de celui-ci de longueur relativement importante, s'étendant de l'épaulement précité jusqu'à l'arrière du stator. Dans la solution connue détaillée ci-dessus, la portion d'arbre sous traction est cantonnée à celle au contact des roulements avant. Une plus grande longueur d'arbre sous traction permet de rigidifier celui-ci sur une distance plus importante, et donc d'améliorer encore les performances du moteur et en particulier la précision d'alignement et de rotation, et de supprimer le risque de desserrage de l'écrou.

La partie filetée ci-dessus s'étend préférentiellement, selon l'axe de l'arbre, à partir d'une extrémité avant positionnée au niveau de la moitié arrière du stator. La partie filetée se prolonge axialement avantageusement en arrière du stator.

Le moteur peut comporter deux roulements de guidage avant, entre l'épaulement et l'écrou. Ce ou ces roulements avant peuvent chacun être à contacts obliques, le ou les roulements avant étant de préférence étanches et graissés. L'utilisation de roulements étanches et graissés permet d'éviter l'utilisation d'un joint à lèvre en arrière du ou des roulements avant, et d'éliminer les frottements correspondants.

De plus, cela peut permettre de réaliser l'écrou avec une épaisseur qui correspond sensiblement à celle de la bague radialement interne du roulement avant à son contact, notamment avec une épaisseur égale à celle de la bague à ± 20 %. Une pression de contact trop forte contre cette bague radialement interne est ainsi évitée.

Le moteur électrique peut comporter un carter monobloc qui loge le stator et un frein, ce carter étant de préférence cylindrique de révolution. Le flasque avant peut être rapporté sur ce carter, de même qu'un flasque arrière qui supporte le roulement arrière.

Le stator comporte de préférence une pièce en matière thermoplastique injectée, servant de support à au moins un capteur thermique.

Cette pièce de support peut être agencée pour coiffer les têtes de bobines du stator à une extrémité, de préférence son extrémité arrière.

La pièce de support présente de préférence une forme annulaire, avec des jupes tubulaires radialement interne et externe concentriques, reliées par une paroi intermédiaire ajourée, dont les ajours permettent le passage des fils du ou des capteurs et laisse passer une résine d'enrobage du stator.

Le stator peut comporter des isolants d'extrémité derrière lesquels se glisse la jupe radialement interne, lors du montage de la pièce de support dans le carter du moteur.

La pièce de support comporte au moins une patte de maintien du capteur, moulée avec l'une au moins de la paroi intermédiaire et des jupes interne et externe. Cette patte peut être élastiquement déformable, de façon à exercer une légère pression sur le capteur en attente d'enrobage par la résine du stator. Le capteur est de préférence un thermocouple.

L'arbre peut être réalisé avec un filet hélicoïdal externe.

L'arbre peut présenter un diamètre sensiblement constant entre l'épaulement qui sert de butée au(x) roulement(s) avant et la portion filetée sur laquelle l'écrou vient en prise.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 est une coupe longitudinale, schématique et partielle, d'un moteur réalisé conformément à l'invention,
- la figure 2 représente isolément la pièce de support du capteur thermique, et
- les figures 3 à 5 sont des vues analogues à la figure 1, de variantes de réalisation du moteur.

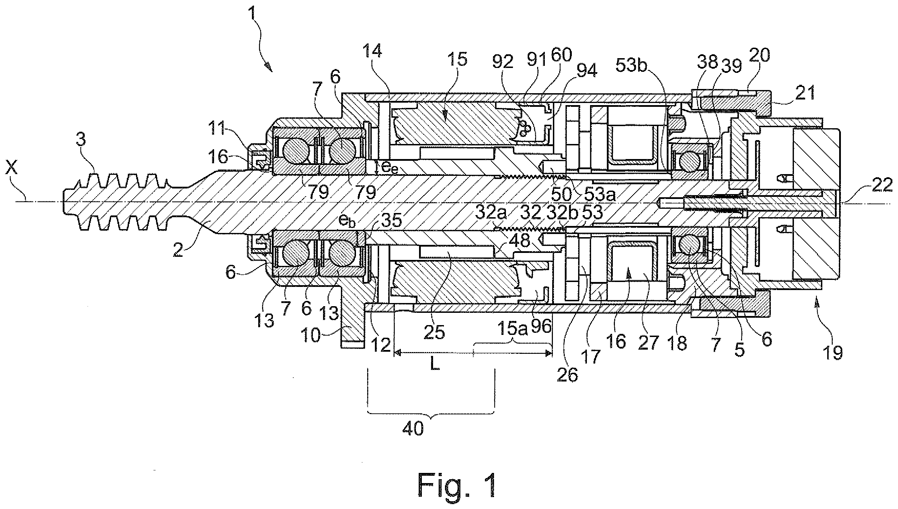

Le moteur 1 selon l'invention, représenté sur la figure 1, comporte un arbre 2 tournant autour d'un axe X.

L'arbre 2 est de préférence métallique et usiné d'un seul bloc, en acier par exemple.

L'arbre 2 présente extérieurement un moyen d'entraînement, tel que par exemple, comme illustré, un filet hélicoïdal externe 3, lequel peut venir en prise avec une roue dentée non représentée, le moteur 1 appartenant par exemple à un actionneur d'un bras robotisé.

Le filet hélicoïdal 3 peut avoir été usiné dans la masse, comme illustré.

L'arbre 2 est guidé dans sa rotation, à l'avant, par deux roulements 4, de préférence à contacts obliques, comme illustré, disposés l'un derrière l'autre, et à l'arrière par un roulement arrière 5.

Les roulements 4 et 5 sont connus en eux-mêmes, et sont étanches et graissés, comportant des disques d'étanchéité 6 qui confinent le lubrifiant entre les bagues au contact desquelles les éléments roulants 7 se déplacent.

Les roulements avant 4 sont portés par un flasque avant 10 qui loge également un joint racleur 11 s'appliquant sur l'arbre 2.

Les bagues radialement externes 13 des roulements avant 4 sont bloquées axialement sur le flasque entre une paroi frontale de celui-ci et par un circlip 12. Les bagues radialement internes 79 sont bloquées axialement vers l'avant par un épaulement 16 de l'arbre 2.

Le flasque 10 est assemblé à un carter 14, cylindrique d'axe X, qui loge un stator 15 et un frein 16 à manque de courant, connu en lui-même, comportant une armature mobile 17, rappelée en position de freinage contre une garniture de frein d'un disque de frein par un ou plusieurs ressorts non représentés. Un solénoïde 27 éloigne, lorsqu'alimenté, l'armature 17 de la garniture de frein 26, contre l'action du ou des ressorts.

Le carter 14 est fermé à l'arrière par un flasque arrière 18 qui porte le roulement arrière 5, et sur lequel peut être fixé, comme illustré, un codeur 19 connu en lui-même, ce codeur comportant une partie fixe 20 fixée à l'aide de vis 21 sur le flasque 18 et une partie mobile fixée sur l'arbre 2 à l'aide d'une vis 22.

Le rotor comporte des aimants permanents 25 qui interagissent magnétiquement avec le stator 15, de façon à générer le couple moteur.

Ces aimants 25 sont portés dans l'exemple considéré par un écrou 30 qui est vissé sur une portion filetée 32 de l'arbre 2.

La portion filetée 32 se situe du côté arrière du stator 15, et s'étend par exemple, comme illustré, axialement selon l'axe X à partir d'une extrémité avant 32a située au niveau de la moitié arrière 15a du stator 15. Une extrémité arrière 32b de la portion filetée est située en arrière du stator 15. Ce dernier est de longueur L.

L'extrémité avant 32a peut être située sensiblement au niveau d'un épaulement 48 de l'écrou 30, contre lequel les aimants 25 viennent en appui par leur extrémité arrière.

Le disque de frein 26 est porté par un moyeu 53 qui vient en appui par son extrémité avant 53a contre l'extrémité arrière de l'écrou 30 et par son extrémité arrière 53b contre la bague radialement interne 38 du roulement arrière 5.

Une rondelle 39, élastiquement déformable, de précharge du roulement arrière 5, s'interpose axialement entre le roulement arrière 5 et le flasque arrière 18. Ainsi, en cas de dilatation thermique et d'allongement de l'arbre 2, le roulement arrière 5 peut reculer vers le flasque arrière 18, l'arbre étant sans jeu axial par rapport au flasque avant 10 du fait de la présente des roulements avant 4 à contacts obliques.

L'écrou 30 vient en appui axialement, à l'avant, par une extrémité 35, contre la bague radialement interne 79 du deuxième roulement avant 4.

Ainsi, en vissant l'écrou 30 sur l'arbre 2 grâce à la portion filetée 32, on peut exercer une contrainte axiale sur les roulements avant 4 pour les bloquer axialement contre l'épaulement 16 de l'arbre 2. Cette contrainte axiale s'accompagne, en réaction, d'une traction qui s'exerce sur la portion d'arbre 40 s'étendant axialement entre l'épaulement 16 et la portion filetée 32. Cette traction tend à rigidifier l'arbre.

L'épaisseur eₑ de l'extrémité de l'écrou 30 qui vient en contact avec la bague 79 est sensiblement la même que celle e_{b} de la bague. On a de préférence eₑ = e_{b} ± 20 %.

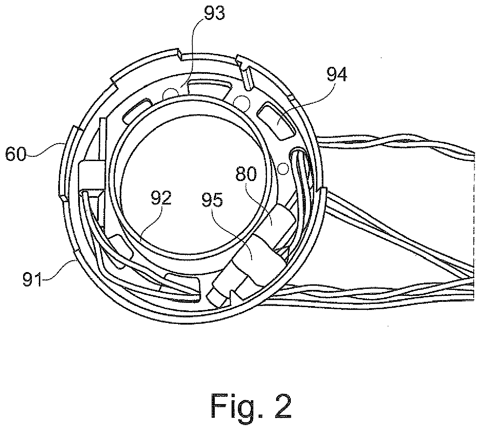

Le stator 15 comporte une pièce de support 60, représenté plus particulièrement à la figure 2, en matière thermoplastique injectée, qui maintient au moins un capteur de température 80 du stator.

La pièce de support 60 comporte une jupe tubulaire radialement externe 91 et une jupe radialement interne 92, concentriques d'axe X, reliées entre elles par une paroi intermédiaire 93 s'étendant perpendiculairement à l'axe X.

La paroi intermédiaire 93 comporte des ajours 94. Une patte 95 de maintien du capteur 80 est moulée avec la paroi intermédiaire 93.

Le stator 15 comporte des bobines et des isolants d'extrémité non représentés. La jupe interne 92 se place derrière ces isolants d'extrémité, tandis que la jupe externe 91 vient en regard de la surface radialement interne du carter 14. Une résine 96 enrobe le bobinage stator et la pièce de support 60, à la faveur des ajours 94 de celle-ci.

L'écrou 30 présente des trous borgnes de serrage 50, à son extrémité arrière.

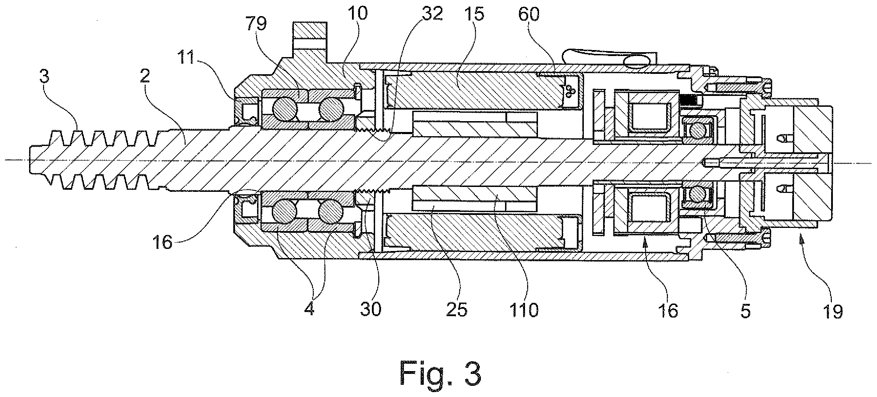

On a représenté aux figures 3 à 5 des variantes de réalisation du moteur selon l'invention.

La variante de la figure 3 diffère de celle de la figure 1 par le fait que l'écrou 30 ne porte plus les aimants 25, ceux-ci étant portés par un moyeu 110 rapporté sur l'arbre 2. La partie filetée 32 s'étend entre le deuxième roulement avant 4 et le stator 15.

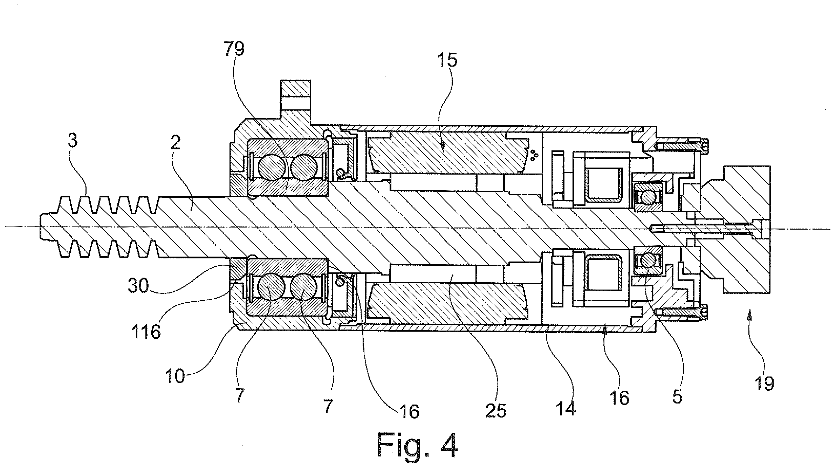

Dans la variante de la figure 4, l'épaulement 16 de l'arbre est tourné vers l'avant et le roulement avant 4 est double.

L'écrou 30 est situé à l'avant du moteur, au niveau d'une ouverture 116 du flasque avant 10. La partie filetée 32 s'étend en avant du roulement avant 4, dans l'ouverture 116. Les aimants 25 sont portés directement par l'arbre 2.

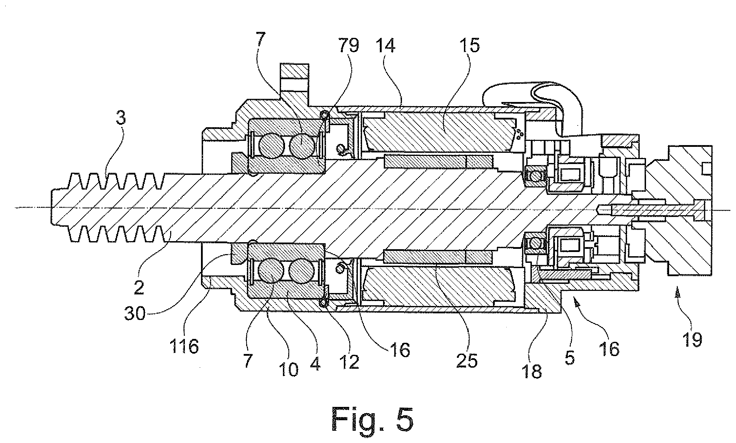

La variante de la figure 5 diffère de celle de la figure 4 par le fait que le flasque avant 10 se prolonge vers l'avant au-delà de l'écrou 30 et par le fait que le frein n'est plus porté par le carter 14 mais par le flasque arrière 18.

Bien entendu, l'invention n'est pas limitée aux exemples qui viennent d'être décrits.

En particulier, le ou les roulements avant peuvent être autres que ceux décrits, de même que le roulement arrière.

## Revendications

1. Moteur électrique (1) comportant :
- un rotor comportant un arbre (2),
- au moins un roulement avant (4) de guidage de l'arbre,
- au moins un roulement arrière (5) de guidage de l'arbre,
- des aimants (25) permanents tournant avec l'arbre et interagissant mécaniquement avec un stator,
**caractérisé par le fait que** l'arbre (2) est monolithique et présente un épaulement (16), et le ou les roulements avant (4) sont bloqués axialement contre l'épaulement (16) par un écrou (30) vissé sur l'arbre (2), l'arbre présentant une portion filetée (32) en prise avec l'écrou (30), cette portion filetée (32) s'étendant en arrière du ou des roulements avant (4), du côté arrière du stator.

2. Moteur selon la revendication 1, les aimants (25) étant portés par l'écrou (30).

3. Moteur selon la revendication 1 ou 2, la portion filetée (32) ayant une extrémité avant (32a) située au niveau de la moitié arrière (15a) du stator.

4. Moteur selon l'une quelconque des précédentes revendications, comportant deux roulements avant (4) de guidage, entre l'épaulement (16) et l'écrou (30).

5. Moteur selon l'une quelconque des revendications précédentes, le ou les roulements avant (4) étant chacun à contacts obliques.

6. Moteur selon l'une quelconque des revendications précédentes, le ou les roulements avant (4) étant étanches et graissés.

7. Moteur électrique selon l'une quelconque des revendications précédentes, comportant un carter monobloc (14) qui loge le stator (15) et un frein (16), ce carter (14) étant de préférence cylindrique de révolution.

8. Moteur selon l'une quelconque des revendications précédentes, le stator (15) comportant une pièce (60) en matière thermoplastique injectée servant de support à un capteur thermique (80).

9. Moteur selon la revendication précédentes, la pièce de support (60) comportant des jupes concentriques radialement interne (92) et externe (91), reliées par une paroi intermédiaire (93) ajourée.

10. Moteur selon la revendication 8 ou 9, la pièce de support (60) comportant une languette (95) de maintien du capteur (80).

11. Moteur selon l'une quelconque des revendications précédentes, l'arbre (2) étant réalisé avec un filet hélicoïdal externe (3).

## Patentansprüche

1. Elektromotor, (1) umfassend:
- einen Rotor mit einer Welle (2),
- mindestens ein vorderes Wellenführungslager (4),
- mindestens ein hinteres Wellenführungslager (5),
- Permanentmagnete (25), die mit der Welle rotieren und mechanisch mit einem Stator zusammenwirken,
**dadurch gekennzeichnet, dass** die Welle (2) monolithisch ist und einen Absatz (16) aufweist, und das/die vordere(n) Lager (4) axial gegen den Absatz (16) durch eine auf die Welle (2) aufgeschraubte Mutter (30) gesichert ist/sind, wobei die Welle einen Gewindeabschnitt (32) in Eingriff mit der Mutter (30) aufweist, wobei sich dieser Gewindeabschnitt (32) hinter dem/den vorderen Lager(n) (4) auf der Rückseite des Stators erstreckt.

2. Motor nach Anspruch 1, wobei die Magnete (25) von der Mutter (30) getragen werden.

3. Motor nach Anspruch 1 oder 2, wobei der Gewindeabschnitt (32) ein vorderes Ende (32a) aufweist, das an der hinteren Hälfte (15a) des Stators angeordnet ist.

4. Motor nach einem der vorangehenden Ansprüche, umfassend zwei vordere Führungslager (4) zwischen dem Absatz (16) und der Mutter (30).

5. Motor nach einem der vorangehenden Ansprüche, wobei jedes der vorderen Lager (4) ein Schrägkugellager ist.

6. Motor nach einem der vorangehenden Ansprüche, wobei das (die) vordere(n) Lager (4) abgedichtet und gefettet ist (sind).

7. Elektromotor nach einem der vorangehenden Ansprüche, umfassend ein Monoblock-Gehäuse (14), das den Stator (15) und eine Bremse (16) aufnimmt, wobei dieses Gehäuse (14) vorzugsweise rotationszylindrisch ist.

8. Motor nach einem der vorangehenden Ansprüche, wobei der Stator (15) ein Teil (60) aus eingespritztem thermoplastischem Material aufweist, das als Träger für einen Temperatursensor (80) dient.

9. Motor nach dem vorangehenden Anspruch, wobei das Trägerteil (60) radial innere (92) und äußere (91) konzentrische Schürzen aufweist, die durch eine durchbrochene Zwischenwand (93) verbunden sind.

10. Motor nach Anspruch 8 oder 9, wobei das Trägerteil (60) eine Haltelasche (95) für den Sensor (80) aufweist.

11. Motor nach einem der vorhangehenden Ansprüche, wobei die Welle (2) mit einem schraubenförmigen Außengewinde (3) ausgeführt ist.

## Claims

1. Electric motor (1) comprising:
- a rotor with a shaft (2),
- at least one front bearing (4) for guiding the shaft,
- at least one rear bearing (5) for guiding the shaft,
- permanent magnets (25) turning with the shaft and mechanically interacting with a stator,
**characterised in that** the shaft (2) is monolithic and has a shoulder (16), and the front bearing(s) (4) are axially blocked against the shoulder (16) by a nut (30) screwed onto the shaft (2), the shaft having a threaded portion (32) in engagement with the nut (30), this threaded portion (32) extending behind the front bearing(s) (4) on the rear side of the stator.

2. Motor according to claim 1, wherein the magnets (25) are carried by the nut (30).

3. Motor according to claim 1 or 2, wherein the threaded portion (32) has a front end (32a) situated at the level of the rear half (15a) of the stator.

4. Motor according to any of the preceding claims, comprising two front guide bearings (4) between the shoulder (16) and the nut (30).

5. Motor according to any of the preceding claims, wherein the front bearing(s) (4) are each angular contact bearings.

6. Motor according to any of the preceding claims, wherein the front bearing(s) (4) are sealed and lubricated.

7. Electric motor according to any of the preceding claims, comprising a monobloc housing (14) which accommodates the stator (15) and a brake (16), wherein said housing (14) is preferably cylindrical in revolution.

8. Motor according to any of the preceding claims, wherein the stator (15) comprises a part (60) made of injected thermoplastic material serving as support for a thermal sensor (80).

9. Motor according to the preceding claim, wherein the support piece (60) comprises radially inner (92) and outer (91) concentric skirts connected together by a perforated intermediate wall (93).

10. Motor according to claim 8 or 9, wherein the support piece (60) comprises a tab (95) holding the sensor (80).

11. Motor according to any of the preceding claims, wherein the shaft (2) is produced with an external helicoidal thread (3).
